# EUROPEAN PATENT APPLICATION

(11) **EP 4 632 882 A1**
(43) Date of publication of application: **15.10.2025**
(21) Application number: 24858425.2
(22) Date of filing: 22.08.2024
(51) Int. Cl.: H01M 50/103, H01M 50/145, H01M 50/124, H01M 10/052

(54) **BATTERY CELL CASING AND BATTERY CELL**

(30) Priority: 29.08.2023 CN 202322329309 U; 30.04.2024 CN 202420954060 U; 02.07.2024 CN 202421545698 U
(71) Applicant: Eve Power Co., Ltd., Jingmen, Hubei 448000 (CN)
(72) Inventor: XU, Yunjie, Jingmen, Hubei 448000 (CN); LI, Yong, Jingmen, Hubei 448000 (CN); ZHAO, Hongwan, Jingmen, Hubei 448000 (CN); LI, Qiuping, Jingmen, Hubei 448000 (CN); SONG, Xiangling, Jingmen, Hubei 448000 (CN); SUN, Fei, Jingmen, Hubei 448000 (CN); CHE, Liyuan, Jingmen, Hubei 448000 (CN); CHEN, Xue, Jingmen, Hubei 448000 (CN); GAO, Xueru, Jingmen, Hubei 448000 (CN)
(74) Representative: Berggren Oy
(86) International application number: PCT/CN2024/113893
(87) International publication number: WO 2025/044882

(57) **Abstract**

The present disclosure provides a battery cell shell and a battery cell, where the battery cell shell includes a shell body and a first insulating coating disposed on an outer surface of the shell body. The first insulating coating in the battery cell shell provided by the present disclosure can reduce the risk of corrosion and damage of the shell body and prolong the service life.

## Description

This application claims priority to Chinese Patent Application No. 202322329309.2, filed with the Chinese Patent Office on August 29, 2023, priority to Chinese Patent Application No. 202420954060.6, filed with the Chinese Patent Office on April 30, 2024, and priority to Chinese Patent Application No. 202421545698.0, filed with the Chinese Patent Office on July 2, 2024, contents of all of which are incorporated herein by reference in their entireties.

### TECHNICAL FIELD

The present disclosure relates to the field of battery technologies, and more particular to a battery cell shell and a battery cell.

### BACKGROUND

A battery cell generally includes a shell and a core, where the shell is configured to protect the core against collision or corrosion.

### SUMMARY

In the related art, a surface of the battery cell shell is easily contaminated with dust, and there is a risk of corrosion and damage of the battery cell, which affects the service life.

The present disclosure provides a battery cell shell. The battery cell shell includes a shell body and a first insulating coating disposed on an outer surface of the shell body.

The present disclosure further provides a battery cell. The battery cell includes the battery cell shell as described above.

### Beneficial Effects

The battery cell shell of the present disclosure includes the shell body and the first insulating coating disposed on the outer surface of the shell body. The first insulating coating can reduce the risk of corrosion and damage of the shell body to prolong the service life.

The battery cell of the present disclosure can reduce external corrosion by using the battery cell shell as described above, thereby prolonging the service life of the battery cell.

### DESCRIPTION OF THE DRAWINGS

**FIG.** 1 is a perspective diagram of the structure of a battery cell shell according to some embodiments of the present disclosure.
FIG. 2 is a second perspective diagram of the structure of a battery cell shell according to some embodiments of the present disclosure.
FIG. 3 is an enlarged view of a portion A in FIG. 2.
FIG. 4 is an enlarged view of a portion C in FIG. 1.
FIG. 5 is a front view of a battery cell shell according to some embodiments of the present disclosure.
FIG. 6 is a side view of a battery cell shell according to some embodiments of the present disclosure.
FIG. 7 is a bottom view of a battery cell shell according to some embodiments of the present disclosure.
FIG. 8 is a top view of a battery cell shell according to some embodiments of the present disclosure.
FIG. 9 is an enlarged view of a portion B in FIG. 8.
FIG. 10 is a third perspective diagram of the structure of a battery cell shell according to some embodiments of the present disclosure.
FIG. 11 is an enlarged view of a portion D in FIG. 10.
FIG. 12 is a first exploded view of a battery cell according to some embodiments of the present disclosure.
FIG. 13 is a first partial cross-sectional view of a battery cell shell according to some embodiments of the present disclosure.
FIG. 14 is a second partial cross-sectional view of a battery cell shell according to some embodiments of the present disclosure.
FIG. 15 is a first diagram of a second protection layer of a battery cell shell according to some embodiments of the present disclosure.
FIG. 16 is a second diagram of a second protection layer of a battery cell shell according to some embodiments of the present disclosure.
FIG. 17 is a third diagram of a second protection layer of a battery cell shell according to some embodiments of the present disclosure.
FIG. 18 is a schematic diagram of processing of a barrel according to some embodiments of the present disclosure.
FIG. 19 is a first schematic structural diagram of a battery cell according to some embodiments of the present disclosure.
FIG. 20 is a first cross-sectional view of the structure of a battery cell shell according to some embodiments of the present disclosure.
FIG. 21 is a first front view of the structure of a battery cell shell according to some embodiments of the present disclosure.
FIG. 22 is a second schematic structural diagram of a battery cell according to some embodiments of the present disclosure.
FIG. 23 is a second cross-sectional view of the structure of a battery cell shell according to some embodiments of the present disclosure.
FIG. 24 is a second front view of the structure of a battery cell shell according to some embodiments of the present disclosure.
FIG. 25 is a schematic structural diagram of a second insulating coating according to some embodiments of the present disclosure.
FIG. 26 is a second exploded view of a battery cell according to some embodiments of the present disclosure.
FIG. 27 is a second schematic structural diagram of a battery cell according to some embodiments of the present disclosure.

REFERENCE NUMERALS OF THE ACCOMPANYING DRAWING:

100. Battery cell shell; 1. Shell body; 110. Barrel; 120. Bottom plate; 10. Accommodating chamber; 11. Shell surface; 111. First side surface; 112. Second side surface; 113. Bottom surface; 12. Connection surface; 13. Transition surface; 21. First rough layer; 22. Second rough layer; 23. Third rough layer; 3. First insulating coating; 4. First protection layer; 5. Second protection layer; 51. Insulating layer; 52. Anti-corrosion layer; 6. Base layer; 7. Second insulating coating; 71. Groove; 200. Battery cell; 210. Cover plate; 220. Core; 221. Positive tab; 222. Negative tab; 231. Positive pole; 232. Negative pole; 241. Resistance sheet; 242. Insulating member.

### DETAILED DESCRIPTION

In description of the present disclosure, it should be noted that the terms "interconnection", "connection" and "fixing" should be understood in a broad sense, unless otherwise clearly specified and defined. For example, "fixing" can be a fixed connection, a detachable connection, or integrated connection. It can be a mechanical connection or an electrical connection. It can be directly connected or indirectly connected through an intermediary. It can also be the connection between two elements or the interaction between two elements. Those ordinary skilled in the art can understand the specific meanings of the above terms in the present disclosure according to specific situations.

In the present disclosure, it should he noted that unless otherwise clearly defined and limited, a first feature "on" or "under" a second feature may mean that the first feature directly contacts the second feature, or that the first feature contacts the second feature via an additional feature there between instead of directly contacting the second feature. Moreover, the first feature "on", "above", and "over" the second feature may mean that the first feature is right over or obliquely upward over the second feature or mean that the first feature has a horizontal height higher than that of the second feature. The first feature "under", "below", and "beneath" the second feature may mean that the first feature is right beneath or obliquely downward beneath the second feature or mean that horizontal height of the first feature is lower than that of the second feature.

In the description of the present embodiments, orientations or position relationships indicated by the terms "upper", "lower", "left", "right", "front", and "back" are based on orientations or position relationships illustrated in the drawings. The terms are used to facilitate and simplify the description and operations of the present disclosure, rather than indicate or imply that the devices or elements referred to herein are required to have specific orientations or be constructed or operate in the specific orientations. Accordingly, the terms should not be construed as limiting the present disclosure. In addition, the terms "first" and "second" are used for the purpose of distinguishing elements in terms of description of the elements and not in a particular sense.

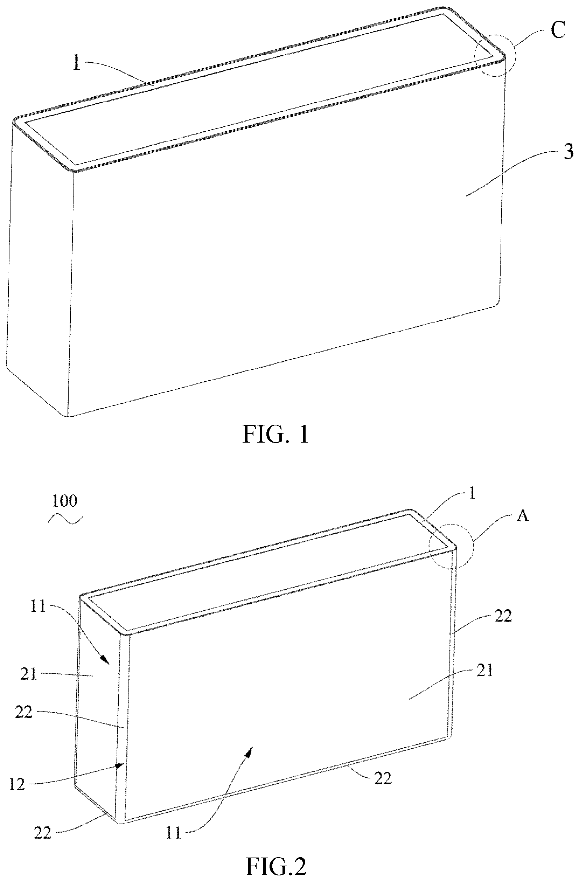

In a first aspect, an embodiment of the present disclosure provides a battery cell shell 100, including a shell body 1 and a first insulating coating 3 disposed on an outer surface of the shell body 1, as shown in FIG. 1. The first insulating coating 3 disposed on the outer surface of the shell body 1 can provide insulation and protection to the shell body 1.

In some embodiments, the shell body 1 includes at least two shell surfaces 11, and a connection surface 12 disposed between adjacent ones of the shell surfaces 11 with an included angle therebetween, as shown in FIGS. 2 to 4. An outer surface of each of the shell surfaces 11 is provided with a first rough layer 21, an outer surface of the connection surface 12 is provided with a second rough layer 22, and a roughness R₁ of the first rough layer 21 and a roughness R₂ of the second rough layer 22 satisfy R₁<R₂.

In the related art, a uniform surface treatment is generally performed for the battery cell shell 100, and then the first insulating coating layer 3 is provided on the battery cell shell 100 after the surface treatment has been performed. However, since adhesion properties of the first insulating coating 3 to different regions in the battery cell shell 100 are different, it is easy to cause the first insulating coating 3 to fall off from a portion of the different regions during use of the battery cell shell 100, resulting in corrosion of the battery cell shell 100 and the like. A connection surface 12 between adjacent shell surfaces 11 in the battery cell shell 100 has a poor adhesion to the first insulating coating 3 due to bending or the like of the connection surface 12, and the first insulating coating 3 is more easily fallen off from the connection surface 12 than other regions.

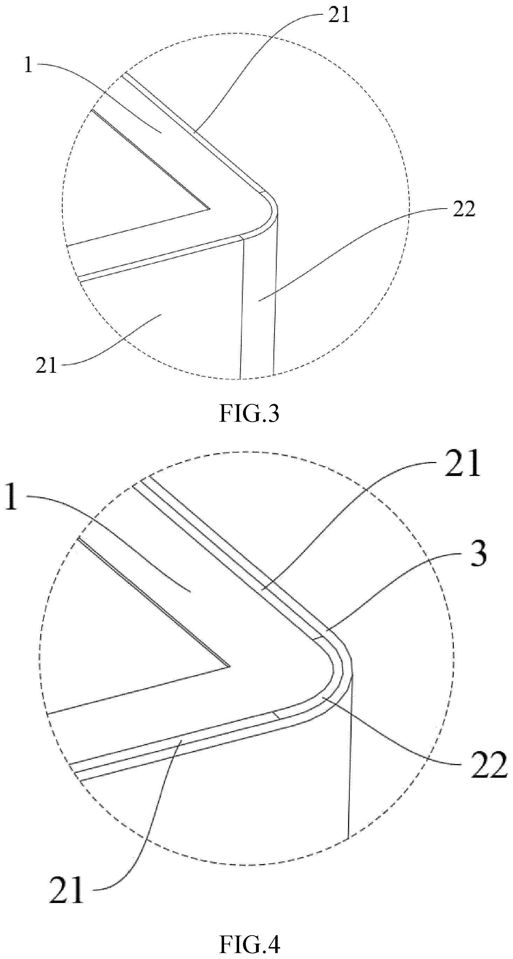

As shown in FIGS. 1 and 4, the first insulating coating 3 is provided on the first rough layer 21 and the second rough layer 22, so that the adhesion of the first insulating coating 3 to the shell body 1 can be improved by the first rough layer 21 and the second rough layer 22. Since the roughness of the first rough layer 21 and the second rough layer 22 is different to compensate for different adhesion of the shell surface 11 and the connection surface 12 due to different structures of the shell surface 11 and the connection surface 12, the first insulating coating 3 has substantially uniform adhesion on the first rough layer 21 and the second rough layer 22 to avoid cracking or falling off of the first insulating coating 3 due to different adhesion of the first insulating coating 3 to different regions.

Illustratively, as shown in FIGS. 1 and 4, the first insulating coating 3 is disposed on a surface layer of the battery cell shell 100, and the shell body 1, the first rough layer 21 and the second rough layer 22, and the first insulating coating 3 are sequentially arranged from inside to outside. The first rough layer 21 and the second rough layer 22 are provided on the shell body 1 and can be stably bonded to the shell body 1, and surfaces of the first rough layer 21 and the second rough layer 22 are formed with a plurality of tiny gaps and have microstructures with protrusions and recesses. The first insulating coating 3 is provided on the surfaces of the first rough layer 21 and the second rough layer 22, and material particles in the first insulating coating 3 can be embedded in the tiny gaps of the first rough layer 21 and the second rough layer 22 to sufficiently contact with the microstructures, thereby improving a bonding strength of the first insulating coating 3 to the first rough layer 21 and the second rough layer 22 so as to enable the first insulating coating 3 to be stably adhered to the surfaces of the first rough layer 21 and the second rough layer 22.

In the battery cell shell 100 provided in the embodiments of the present disclosure, outer surfaces of the shell surface 11 and the connection surface 12 are provided with the first rough layer 21 and the second rough layer 22, respectively, and the roughness R₁ of the first rough layer 21 and the roughness R₂ of the second rough layer 22 are different, that is, R₁<R₂, so that the connection surface 12 can have better adhesion to the first insulating coating 3 to compensate for the poor adhesion of the connection surface 12 to the first insulating coating 3 due to the bending of the connection surface 12. As a result, the first insulating coating 3 can achieve a good adhesion to both the shell surface 11 and the connection surface 12 to reduce or avoid falling off of the first insulating coating 3 due to the poor adhesion of the connection surface 12 to the first insulating coating 3 during the use of the battery cell shell 100.

Specifically, an effect of adhering the surface of the connection surface 12 to the first insulating coating 3 is affected due to the bending of the connection surface 12 or the like, and thus the adhesion of the connection surface 12 to the first insulating coating 3 can be improved by providing the surface of the connection surface 12 with greater roughness. The surface of the shell surface 11 has a flatter surface, and the adhesion of the shell surface 11 to the first insulating coating 3 is better than that of the connection surface 12 to the first insulating coating 3, so that the roughness of the shell surface 11 is lower than that of the connection surface 12, thereby reducing the pretreatment time and saving the cost.

In some embodiments, one side of the battery cell shell 100 is opened to facilitate installation of the battery cell, and a cover plate for covering the opening is provided at the opening after the battery cell is installed, to form a sealed accommodating chamber. The battery cell shell 100 may be a cylindrical shape or a rectangular parallelepiped shape or the like. When the battery cell shell 100 is cylindrical shape, one of circular surfaces of the cylindrical shape is opened, and the shell surface 11 of the battery cell shell 100 includes a cylindrical surface and a circular surface, and a connection surface 12 is provided between the cylindrical surface and the circular surface. The first rough layer 21 is provided on outer surfaces of the cylindrical surface and the circular surface, and the second rough layer 22 is provided on an outer surface of the connection surface 12, so that the adhesion of the first insulating coating 3 to each portion of the battery cell shell 100 can be good by providing the first rough layer 21 and the second rough layer 22 with different roughness.

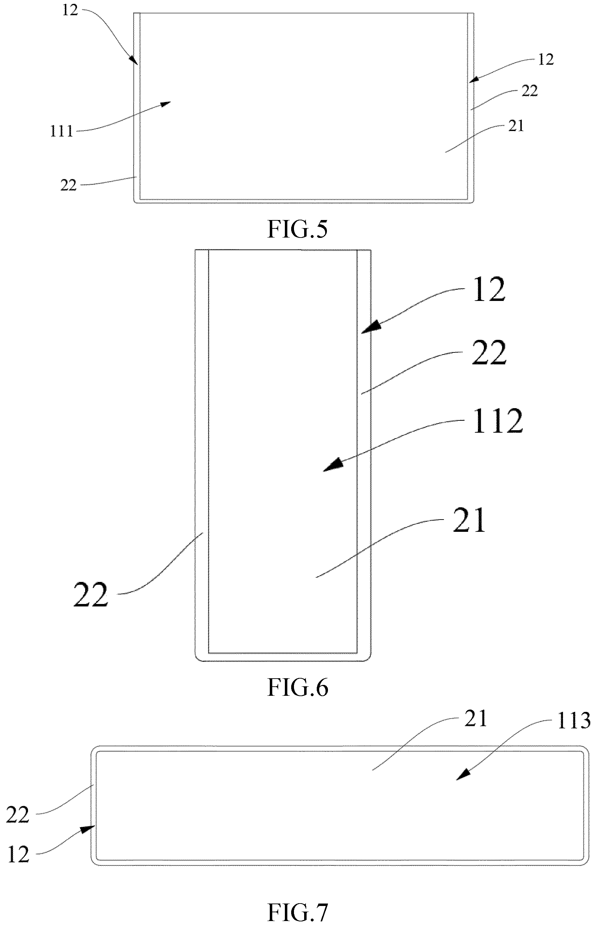

When the battery cell shell 100 is a rectangular parallelepiped shape as shown in FIGS. 1 to 7, one of the surfaces of the battery cell shell 100 is opened, and the shell surface 11 of the battery cell shell 100 includes two first side surfaces 111, two second side surfaces 112, and a bottom surface 113, and a connection surface 12 is provided between every two adjacent ones of the surfaces. Each of outer surfaces of the two first side surfaces 111, the two second side surfaces 112, and the bottom surface 113 is provided with a first rough layer 21, and the outer surface of the connection surface 12 is provided with a second rough layer 22, so that the adhesion of the first insulating coating 3 to each portion of the battery cell shell 100 can be good by providing the first rough layer 21 and the second rough layer 22 with different roughness.

The first rough layer 21 and the second rough layer 22 may be realized in a plurality of ways such as sand blasting, sandpaper polishing, and laser cleaning.

Illustratively, the surface treatment may be performed for the shell body 1 with sand blasting to form the first rough layer 21 and the second rough layer 22. A sand blasting material may be selected from materials such as quartz sand, silica sand, steel balls, pomegranate sand, aluminum oxide, or steel balls. In order to form the first rough layer 21 and the second rough layer 22 with different roughness on the outer surfaces of the shell surface 11 and the connection surface 12, different sizes of sand blasting materials may be used, and different sand blasting velocities may be set.

In some embodiments, the roughness R₁ of the first rough layer 21 satisfies: 3.2≤Ra≤12.5, and 6.3≤Rz≤50.

When the roughness of the first rough layer 21 is too low, the adhesion performance of the first rough layer 21 to the first insulating coating 3 is poor, and an adhesion area of the first rough layer 21 to the first insulating coating 3 is reduced, so that the first insulating coating 3 is easily fallen off. When the roughness of the first rough layer 21 is too high, contact points between the first insulating coating 3 and the first rough layer 21 is reduced due to excessive protrusions and recesses, and the material in the first insulating coating 3 cannot be sufficiently penetrated into the gaps of the first rough layer 21, thereby reducing the adhesion performance. The roughness R₁ of the first rough layer 21 satisfies: 3.2≤Ra≤12.5, and 6.3≤Rz≤50, so that the adhesion performance of the first rough layer 21 to the first insulating coating 3 can be increased. The material in the first insulating coating 3 can better fill the tiny gaps on the surface of the first rough layer 21, thereby forming a better bonding effect.

Illustratively, when the first rough layer 21 is formed by a sand blasting process, a particle size of the sand blasting material may be set to 10 µm-300 µm, a sand blasting velocity may be set to 10 m³/h-100 m³/h, a distance between a sand blasting head and the shell surface may be set to 0.25-2cm, and the number of times of the sand blasting may be set to two or more times.

It should be noted that Ra and Rz both represent roughness, where Ra represents an arithmetic average of absolute values of contour offsets within a sampling length, and Rz represents a sum of an average of peak heights of five largest contours within the sampling length and an average of valley depths of the five largest contours.

In some embodiments, the roughness R₂ of the second rough layer 22 satisfies: 6.3≤Ra≤50, and 25≤Rz≤100.

When the roughness of the second rough layer 22 is too low or too high, similar problems as those of the first rough layer 21 are also present easily. In addition, the roughness of the second rough layer 22 is greater than that of the first rough layer 21, so that the second rough layer 22 can provide better adhesion performance than the first rough layer 21 while keeping the roughness of the second rough layer 22 in a proper range, thereby compensating for a poor adhesion performance of the connection surface 12 to the first insulating coating 3 due to bending of the connection surface 12. Therefore, the roughness R₂ of the second rough layer 22 satisfies: 6.3≤Ra≤50, and 25≤Rz≤100.

Illustratively, when the second rough layer 22 is formed by a sand blasting process, a particle size of the sand blasting material may be set to 5 µm-100 µm, a sand blasting velocity may be set to 8 m³/h-80 m³/h, a distance between a sand blasting head and the shell surface may be set to 0.25-2cm, and the number of times of the sand blasting may be set to two or more times.

In some embodiments, the first rough layer 21 has a thickness of 50 µm-120 µm. The greater the thickness of the first rough layer 21, the greater the roughness of the first rough layer 21, and the greater the contact area of the first rough layer 21 with the first insulating coating layer 3, thereby improving the adhesion effect. The less the thickness of the first rough layer 21, the less the roughness of the first rough layer 21, and the worse the adhesion effect. However, if the thickness of the first rough layer 21 is too large, the strength of the shell body 1 is easily affected, and the material of the first insulating coating 3 is not easily penetrated into the tiny gaps of the first rough layer 21 so as to tightly bond the first rough layer 21 to the first insulating coating 3. Therefore, the thickness of the first rough layer 21 is set to 50 µm-120 µm.

In some embodiments, the second rough layer 22 has a thickness of 100 µm-200 µm. Similarly, the greater the thickness of the second rough layer 22, the greater the roughness of the second rough layer 22, and the greater the contact area of the second rough layer 22 with the first insulating coating layer 3, thereby improving the adhesion effect. The less the thickness of the second rough layer 22, the less the roughness of the second rough layer 22, and the worse the adhesion effect. However, if the thickness of the second rough layer 22 is too large, the strength of the shell body 1 is easily affected, and the material of the first insulating coating 3 is not easily penetrated into the tiny gaps of the second rough layer 22 so as to tightly bond the second rough layer 22 to the first insulating coating 3. Since the second rough layer 22 is provided on the connection surface 12, the adhesion of the connection surface 12 to the first insulating coating 3 is worse than the shell surface 11 due to the existence of the curved structure of the second rough layer 22, and the thickness of the second rough layer 22 is relatively large, the adhesion effect can be improved while ensuring the thickness of the second rough layer 22 to be in a suitable thickness range. Therefore, the thickness of the second rough layer 22 is set to 100 µm-200 µm.

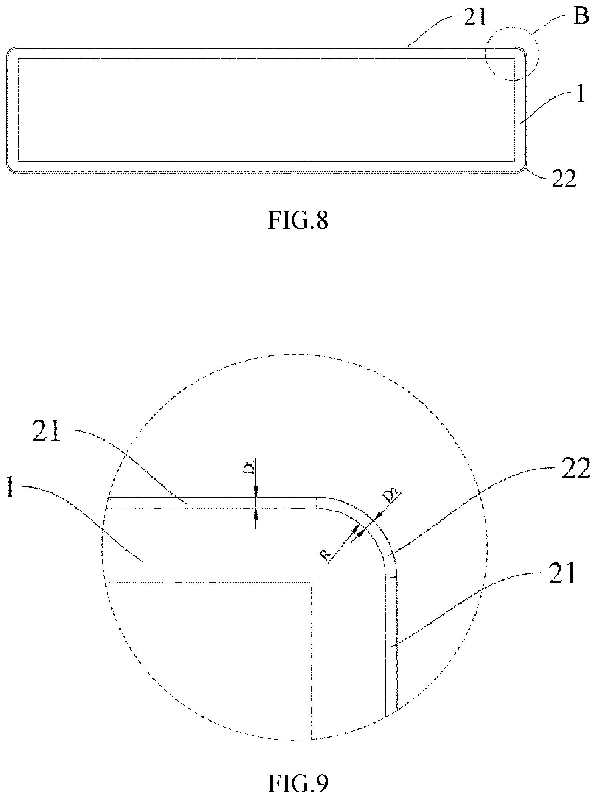

As shown in FIGS. 8 and 9, the thickness of the first rough layer 21 is D₁, and the thickness of the second rough layer is D₂. By reasonably setting the thicknesses of the first rough layer 21 and the second rough layer, the adhesion effect of the first rough layer 21 and the second rough layer 22 to the first insulating coating 3 can be ensured while avoiding deterioration of the strength of the shell body 1 due to the excessive thickness of the first rough layer 21 and the second rough layer 22.

Illustratively, if the surface treatment may be performed for the shell body 1 with a sand blasting process, the thickness of the first rough layer 21 and the second rough layer 22 can be controlled by adjusting process parameters of the sand blasting process, for example, a particle size of a sand blasting material, the number of times of sand blasting, etc.

In some embodiments, the connection surface 12 is a rounded portion or a chamfered portion. By setting the connection surface 12 as the rounded portion or the chamfered portion, a structural strength of the battery cell shell 100 can be enhanced while connecting adjacent shell surfaces 11. The rounded portion and the chamfered portion increase an area of transition between the adjacent shell surfaces 11, facilitating formation of the second rough layers 22 having different roughness on the rounded portion and the chamfered portion. The rounded portion and the chamfered portion can also disperse stress and reduce stress concentration, reducing the risk of damage to the battery cell shell 100.

In some embodiments, as shown in FIGS. 8 and 9, the connection surface 12 is the rounded portion having a radius of 2 mm-4 mm. Compared with the chamfered portion, when the rounded portion is connected to the adjacent shell surfaces 11, the transition between the rounded portion and the adjacent shell surfaces 11 is smoother to reduce a sharp edge, so that the first rough layer 21 and the second rough layer 22 can be smoothly transitioned to reduce the stress concentration occurring in a process of transitioning the sharp edge and reduce the cracking or falling off of the first insulating coating 3 at the sharp edge.

The area of the rounded portion can be ensured by setting the rounded radius of the rounded portion to 2 mm-4 mm, so as to form the second rough layer 22, while the smooth transition of the adjacent shell surfaces 11 can be ensured, thereby reducing or avoiding the occurrence of corners and reducing the risk of cracking or falling off of the insulating coating at the corners.

Illustratively, as shown in FIG. 9, R shown in FIG. 9 is the rounded radius of the rounded portion.

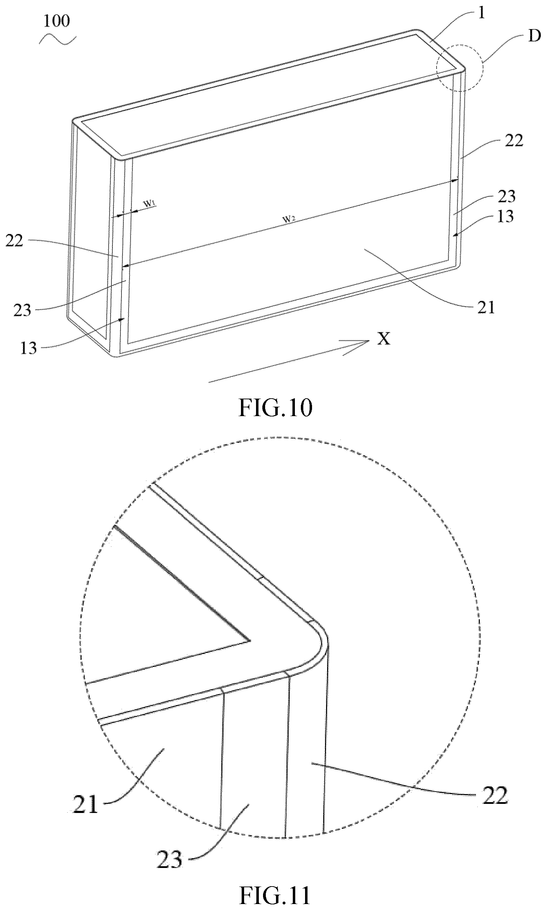

In other embodiments of the present disclosure, as shown in FIGS. 10 and 11, a transition surface 13 is provided on a side of the shell surface 11 adjacent to the connection surface 12. An outer surface of the transition surface 13 is provided with a third rough layer 23, and the roughness R₃ of the third rough layer 23 satisfies R₁<R₃<R₂.

That is, there is a transition surface 13 on the shell surface 11, the transition surface 13 is provided close to the connection surface 12, and the outer surface of the transition surface 13 is provided with a third rough layer 23 having roughness greater than that of the first rough layer 21 and less than that of the second rough layer 22.

It should be understood that the first rough layer 21, the third rough layer 23 and the second rough layer 22 are sequentially connected in a region where the adjacent shell surfaces 11 and the connection surface 12 are formed. The third rough layer 23 can reduce stress concentration at the contact between the first rough layer 21 and the second rough layer 22 due to the excessive roughness difference between the first rough layer 21 and the second rough layer 22, and the stress concentration causes the first insulating coating 3 to crack or fall off from the contact between the first rough layer 21 and the second rough layer 22.

The stress concentration due to different roughness can be dispersed by providing the third rough layer 23 on the transition surface 13, thereby improving the adhesion effect.

In some embodiments, the roughness R₃ of the third rough layer 23 satisfies: 6.3≤Ra≤12.5, and 12.5≤Rz≤50.

It should be understood that the third rough layer 23 is disposed between the first rough layer 21 and the second rough layer 22 and is used to perform transition from the second rough layer 22 having higher roughness to the first rough layer 21 having lower roughness. Good transition can be achieved by making the roughness R₃ of the third rough layer 23 satisfy: 6.3≤Ra≤12.5, and 12.5≤Rz≤50, and good adhesion of the third rough layer 23 to the first insulating coating 3 can be ensured.

In some embodiments, the transition surface 13 shown in FIGS. 10 and 11 is disposed on at least one side of the shell surface 11 in the first direction X, a width W₁ of the transition surface 13 in the first direction X is W₁, and a width of the shell surface in the first direction is W₂; 0.5%≤W₁/W₂≤1%. If the transition surface 13 is too narrow, the stress concentration caused by the different roughness cannot be effectively alleviated. If the transition surface 13 is too wide, the space of the shell surface 11 is occupied, and the adhesion effect of the first insulating coating 3 on the shell surface 11 is affected.

It should be understood that, when the transition surface 13 having the third rough layer 23 is provided on the shell surface 11, the first insulating coating 3 is also provided on the surfaces of the first rough layer 21, the second rough layer 22, and the third rough layer 23, respectively. Since the third rough layer 23 is used to transition the first rough layer 21 and the second rough layer 22, cracking and falling off of the first insulating coating 3 due to the excessive roughness of the adjacent regions is reduced.

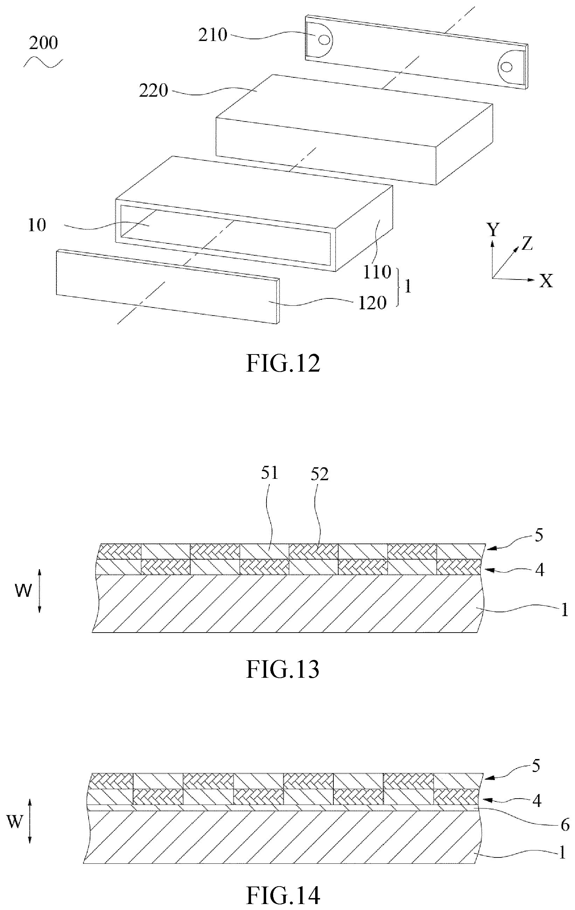

In some embodiments, as shown in FIGS. 12 and 13, the shell body 1 has an accommodating chamber 10 for accommodating a core 220, and a side surface of the shell body 1 toward the accommodating chamber 10 is an inner side surface. A first protection layer 4 is provided on the inner side surface of the shell body 1, and covers the inner side surface of the entire shell body 1. A second protection layer 5 is provided on the inner side surface of the first protection layer 4 away from the shell body 1, and the area of the second protection layer 5 is the same as that of the first protection layer 4. When the core 220 is mounted to the accommodating chamber 10, the core 220 can contact the second protection layer 5. The first protection layer 4 includes a plurality of anti-corrosion layers 52 and a plurality of insulating layers 51, where the plurality of anti-corrosion layers 52 are interleaved with the plurality of insulating layers 51. It should be further understood that each of the anti-corrosion layers 52 is located between two adjacent ones of the insulating layers 51, or that each of the insulating layers 51 is located between two adjacent ones of the anti-corrosion layers 52. The second protection layer 5 includes a plurality of anti-corrosion layers 52 and a plurality of insulating layers 51, where the plurality of anti-corrosion layers 52 are interleaved with the plurality of insulating layers 51. The anti-corrosion layers 52 in the first protection layer 4 are misaligned with the anti-corrosion layers 52 in the second protection layer 5, and the insulating layers 51 in the first protection layer 4 are misaligned with the insulating layers 51 in the second protection layer 5. It should be further understood that the first protection layer 4 and the second protection layer 5 are similar in overall structure, and that the anti-corrosion layers 52 and the insulating layers 51 of the first protection layer 4 have different distribution positions from the anti-corrosion layers 52 and the insulating layers 51 of the second protection layer 5, and that each of the insulating layers 51 in the first protection layer 4 corresponds to corresponding one of the anti-corrosion layers 52 in the second protection layer 5 in a material thickness direction of the shell body 1 (W direction shown in FIGS).

Each of the insulating layers 51 is formed by spraying, and the material of the insulating layer 51 may be selected from plastic materials including polyvinyl chloride (PVC), polyethylene (PE), polytetrafluoroethylene (PTFE), and the like. Each of the anti-corrosion layers 52 includes a material having good corrosion resistance, such as ceramic powder. The anti-corrosion layer 52 may be entirely formed of ceramic powder by spraying, or may be formed of a mixture of ceramic powder and plastic powder by spraying. The anti-corrosion layer 52 has an insulating property, and the corrosion resistance property of the anti-corrosion layer 52 is enhanced by the addition of the ceramic powder to improve the protection layer against electrolyte corrosion, so that the service life of the first protection layer 4 and the second protection layer 5 is prolonged.

It should be understood that the core 220 is separated from the shell body 1 by providing the first protection layer 4 and the second protection layer 5 between the core 220 and the shell body 1. Compared to the related art in which the protection film is wrapped outside the core 220, this structure of the present disclosure eliminates the use of the protection film, that is, the first protection layer 4 and the second protection layer 5, which serve as insulation protection, are formed directly on the inner side surface of the shell body 1 by spraying. When the core 220 is installed, the core 220 can be directly loaded into the accommodating chamber 10, thereby reducing a process of wrapping a film, avoiding a process of wrapping a film for the core 220, and making it easier to control the production quality of the battery cell. At the same time, the anti-corrosion layers 52 are provided on the two protection layers, thereby enhancing the anti-corrosion performance of the protection layers and delaying the corrosion and damage of the electrolyte to the protection layers. The insulating layers 51 and the anti-corrosion layers 52 of one of the two protection layers are misaligned with the insulating layers 51 and the anti-corrosion layers 52 of another of the two protection layers, so that a portion of the insulating layers 51 and a portion of the anti-corrosion layers 52 can be directly formed on the shell body 1, thereby improving the bonding strength of both the insulating layers 51 and the anti-corrosion layers 52 to the shell body 1, and further improving the overall anti-corrosion performance of the first protection layer 4 and the overall anti-corrosion performance of the second protection layer 5.

In some embodiments, a sum of the thicknesses of the first protection layer 4 and the thickness of the second protection layer 5 is 150µm-200µm. It should be understood that the first protection layer 4 and the second protection layer 5 can be gradually corroded under the corrosive action of the electrolyte. By setting a suitable thickness, the service life of the two protection layers meets the design requirements, so that the battery cell can be safely operated within design years. Specifically, an overall thickness dimension of the first protection layer 4 and the second protection layer 5 includes, but is not limited to, 150 µm, 155 µm, 160 µm, 165 µm, 170 µm, 175 µm, 180 µm, 185 µm, 190 µm, 195 µm, and 200 µm. In a practical application, the thickness of the first protection layer 4 may be the same as or different from that of the second protection layer 5, provided that it is only necessary to control the total thickness of the two protection layers in a range of 150 µm-200 µm.

In some embodiments, a proportion of the insulating layers 51 in the first protection layer 4 is greater than or equal to 50%. It should be further understood in the first protection layer 4 that a ratio of a total volume of the plurality of insulating layers 51 to a volume of the first protection layer 4 is greater than or equal to 50%. This structure makes the insulation performance of the first protection layer 4 close to the inner side surface of the shell body 1 more prominent, so as to strengthen the insulation isolation effect of the first protection layer 4 on the shell body 1. The proportion of the anti-corrosion layer 52 in the second protection layer 5 is greater than or equal to 50%. It should be further understood in the second protection layer 5 that a ratio of a total volume of the plurality of anti-corrosion layers 52 to a volume of the first protection layer 5 is greater than or equal to 50%. This structure makes the anti-corrosion performance of the second protection layer 5 close to one side of the core 220 more prominent, so as to delay corrosion of the electrolyte to the second protection layer 5.

In some embodiments, as shown in FIG. 12, the shell body 1 includes a barrel 110 and a bottom plate 120. The barrel 110 is a cavity structure with two opposite ends being opened, the bottom plate 120 is provided at one of the open ends of the barrel 110 and used to block the open end, and the bottom plate 120 is welded to the barrel 110. The accommodating chamber 10 is enclosed by the barrel 110 and the bottom plate 120. In a specific application, the barrel 110 may be cylindrical shape, and correspondingly, the bottom plate 120 is a circular plate, and the formed shell body 1 is also a cylindrical shape for manufacturing a cylindrical battery cell. Alternatively, the barrel 110 may be a rectangular parallelepiped shape, the bottom plate 120 is a quadrilateral plate, and the formed shell body 1 is also a rectangular parallelepiped shape for manufacturing a quadrilateral battery cell.

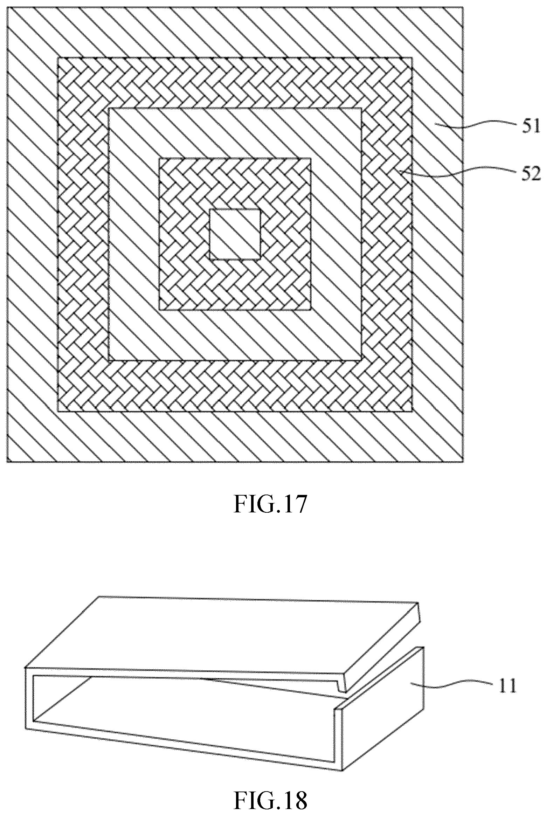

In an alternative embodiment, referring to FIG. 18, the shell body 1 is a rectangular parallelepiped shape structure, i.e., the barrel 110 is a rectangular parallelepiped shape structure. The barrel 110 is formed by bending a quadrilateral sheet, and a joint formed after the bending of the sheet is located on a non-bent edge, that is, the joint is located on one of side surfaces of the barrel 110. In a manufacturing process of the shell body 1, the first protection layer 4 and the second protection layer 5 are formed on an inner side surface of the barrel 110 by spraying before bending the barrel 110, and then the barrel 110 is formed by bending the sheet. In this manner, the spraying operation can be performed while the barrel 110 is in a flat state, so that the operation is facilitated. At the same time, the first protection layer 4 and the second protection layer 5 are formed on a side surface of the bottom plate 120 toward the accommodating cavity 10 by spraying, and finally the bottom plate 120 is welded to the barrel 110. Of course, in other embodiments, it is also possible to perform a bending process on the barrel 110 within a working capacity of a spraying apparatus and perform a spraying operation after the shell body 1 is formed by welding the bottom plate 120 to the barrel 110.

In some embodiments, referring to FIG. 14, the shell further includes a base layer 6, where the base layer 6 is formed on a side of the shell body 1 toward the accommodating chamber 10 by spraying, i.e., the base layer 6 is formed on the inner side surface of the shell body 1. The first protection layer 4 is disposed on the base layer 6. The material of the base layer 6 is the same as that of the shell body 1. In this embodiment, the shell body 1 is an aluminum shell, and the base layer 6 is formed by spraying aluminum powder on the inner side surface of the shell body 1. The purpose of forming the base layer 6 by spraying is to improve the roughness of the inner side surface of the shell body 1 and to improve the bonding strength between the first protection layer 4 and the shell body 1 by smoothing the side surface of the shell body 1 bonded to the first protection layer 4. Of course, in other embodiments, the base layer 6 may be eliminated, and the bonding strength between the first protection layer 4 and the shell body 1 may be improved by polishing the inner side surface of the shell body 1.

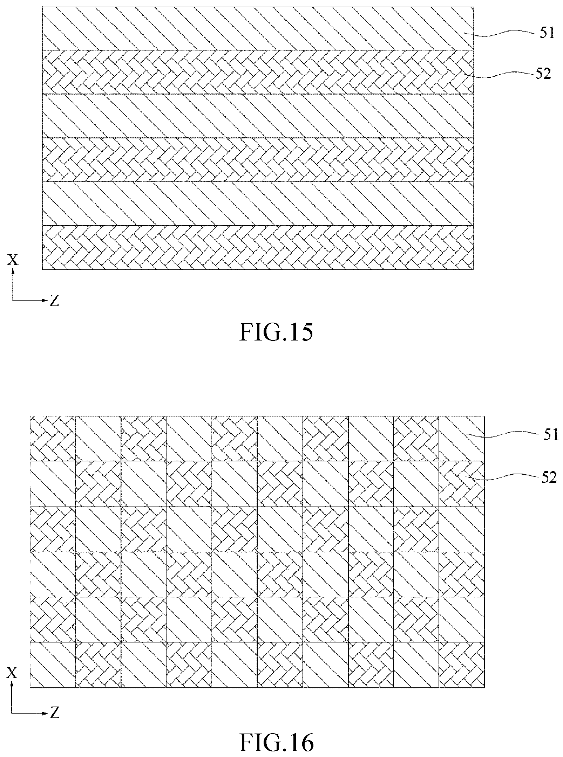

In some embodiments, referring to FIG. 15, the shell body 1 is a rectangular parallelepiped shape structure, and illustrated with reference to larger one of the surfaces of the shell body 1. In the second protection layer 5, a plurality of anti-corrosion layers 52 are spaced apart in a first direction (X direction shown in FIGS). An insulating layer 51 is provided between the two adjacent anti-corrosion layers 52, that is, the plurality of anti-corrosion layers 52 are interleaved with the plurality of insulating layers 51 in the first direction. Accordingly, the insulating layers 51 and the anti-corrosion layers 52 in the first protection layer 4 are arranged in the same manner as the second protection layer 5, except that the insulating layers 51 in the first protection layer 4 is misaligned with the insulating layers 51 in the second protection layer 5. That is, the insulating layers 51 in the first protection layer 4 are in contact with the anti-corrosion layers 52 in the second protection layer 5, and the anti-corrosion layers 52 in the first protection layer 4 are in contact with the insulating layers 51 in the second protection layer 5.

In some embodiments, referring to FIG. 16, the shell body 1 is a rectangular parallelepiped shape structure, and illustrated with reference to larger one of the surfaces of the shell body 1. The second protection layer 5 includes a plurality of protection regions arranged in the first direction, and a plurality of anti-corrosion layers 52 and a plurality of insulating layers 51 are provided in each of the protection regions. The length of the protection region extends in a second direction (Z direction shown in FIGS), a plurality of anti-corrosion layers 52 are spaced apart in the second direction in each of the protection regions, and an insulating layer 51 is provided between two adjacent anti-corrosion layers 52. The anti-corrosion layers 52 and the insulating layers 51 in the two adjacent protection regions are misaligned with each other. It should be further understood that the anti-corrosion layers 52 are in contact with the insulating layers 51 in the two adjacent protection regions in the first direction. Accordingly, the insulating layers 51 and the anti-corrosion layers 52 in the first protection layer 4 are arranged in the same manner as the second protection layer 5, except that the insulating layers 51 in the first protection layer 4 is misaligned with the insulating layers 51 in the second protection layer 5. That is, the insulating layers 51 in the first protection layer 4 are in contact with the anti-corrosion layers 52 in the second protection layer 5, and the anti-corrosion layers 52 in the first protection layer 4 are in contact with the insulating layers 51 in the second protection layer 5. This structure enables the anti-corrosion layer 52 and the insulating layers 51 to be uniformly distributed in the first protection layer 4 or the second protection layer 5.

In some embodiments, referring to FIG. 17, the shell body 1 is a rectangular parallelepiped shape structure, and illustrated with reference to larger one of the surfaces of the shell body 1. A plurality of protection regions are included in the second protection layer 5 and distributed in " 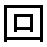 " shape, that is, the plurality of protection regions are sequentially distributed from the middle portion to the periphery of the corresponding side surface. In two adjacent protection regions, one protection region is provided with an anti-corrosion layer 52, and another protection region is provided with an insulating layer 51. Accordingly, the insulating layers 51 and the anti-corrosion layers 52 in the first protection layer 4 are arranged in the same manner as the second protection layer 5, except that the insulating layers 51 in the first protection layer 4 is misaligned with the insulating layers 51 in the second protection layer 5. That is, the insulating layers 51 in the first protection layer 4 are in contact with the anti-corrosion layers 52 in the second protection layer 5, and the anti-corrosion layers 52 in the first protection layer 4 are in contact with the insulating layers 51 in the second protection layer 5.

It should be noted that a main purpose of above several manners for distributing the insulating layers 51 and the anti-corrosion layers 52 is that the insulating layers 51 and the anti-corrosion layers 52 can be uniformly distributed in the first protection layer 4 or the second protection layer 5, so as to improve the overall insulating performance and anti-corrosion performance of the first protection layer 4 and the second protection layer 5. In a practical application, the insulating layers 51 and the anti-corrosion layers 52 may be distributed on one of the side surfaces of the shell body 1 in the above-described manner, or may be distributed on the shell body 1 in an unfolded state (i.e., the inner side surface of the shell body 1) in the above-described manner.

In some embodiments, at least one end of the core 220 in the first direction X is provided with a tab. A second insulating coating 7 is provided circumferentially on an inner side wall of an end of the shell body 1 disposed opposite to the tab. A width of the shell body 1 in the first direction X is H, and a width of the second insulating coating layer 7 in the first direction X is h, where 0.05H≤h≤0.2H.

Since the second insulating coating 7 is provided on the inner side wall of the shell body 1 disposed opposite to the tab, a good insulating relationship is maintained between the tab and the shell body 1, and the insulating adhesive does not need to be attached to the outer portion of the tab, thereby reducing the risk of short-circuit due to falling off of the insulating adhesive. The tab can also be provided closer to the shell body 1, further releasing the space in the shell body 1 to increase the volume of the core 220, and improving the energy efficiency of the battery cell.

A width of the shell body 1 in the first direction X is H, and a width of the second insulating coating 7 in the first direction X is h, where 0.05H≤h≤0.2H. Since the second insulating coating 7 has a certain thickness, the space inside the shell body 1 may be occupied. By reasonably arranging a distribution region of the second insulating coating 7, the insulating effect between the shell body 1 and the tab can be ensured, and the thickness of the shell body 1 in other region can be reduced, thereby increasing the design energy of the battery.

The width h of the second insulating coating 7 in the first direction X and the width H of the shell body 1 in the first direction X may be provided as h=0.05H, h=0.1H, h=0.15H or h=0.2H.

The second insulating coating 7 may be formed by attaching a blue film, etching, spraying, or the like, which is not limited in the present disclosure provided that insulation can be realized.

When the second insulating coating 7 is prepared by spraying, the material of the second insulating coating 7 mainly includes a polyester-based material, an epoxy-based material, polyethylene, and the like. In order to improve the service life and insulation effect of the second insulating coating 7, a polyoxymethylene resin (POM) and a polytetrafluoroethylene (PTFE) may be selected as the material of the second insulating coating 7, so that the prepared second insulating coating 7 has good hardness, adhesion, and wear resistance. Illustratively, the mass ratio of POM to polytetrafluoroethylene is selected to be 96: 4.

When the second insulating coating 7 is applied, an electrostatic spraying process can be selected, which has the advantages of cleaning, energy saving, high efficiency, and the like. Illustratively, in an electrostatic spraying process, a spraying voltage may be set to 40kV, a powder supply pressure may be set to 0.3MPa, curing time may be set to 10 min, and a curing temperature may be set to 180°C.

In some embodiments, the shell body 1 may be an aluminum shell. An aluminum alloy material has characteristics of low density, high specific strength and high specific modulus, and is capable of maintaining light weight while having sufficient mechanical strength and stability. Aluminum and aluminum alloys have good corrosion resistance and excellent thermal conductivity, and contribute to improving the corrosion resistance and thermal conductivity of the battery, thereby improving the safety and stability of the battery. Aluminum alloy materials are easy to be processed into various shapes and sizes, and are less difficult to process.

In some embodiments, the shell body 1 includes: two end plates disposed at two opposite ends of the first direction X; and side plates disposed between the two end plates.

A second insulating coating 7 is arranged on an inner side wall of an end plate of an end of the shell body 1 disposed opposite to the tab.

**A** second insulating coating 7 is arranged on the circumference of an inner side wall of an end of the side plate disposed opposite to the tab.

In the related art, an insulating film is generally provided on the inner side wall of the end plate in the shell body 1, and insulation between the tab and the inner side wall of the end plate is realized by the insulating film, but the insulating film also has a risk of aging, corrosion and falling off.

In the embodiment of the present disclosure, the second insulating coatings 7 are disposed on the inner side walls of the end plate and the side plate disposed opposite to the tab, and insulation between the tab and the end plate and insulation between the tab and the side plate are realized by the second insulating coating 7, thereby reducing or avoiding short-circuit of contact between the tab and the shell body 1 in the battery.

It should be noted in the embodiment of the present disclosure that the shape of the shell body 1 may be a cylindrical shape or a rectangular parallelepiped shape, or the like, and the shape of the core 220 corresponding to the shape of the shell body 1 may be a cylindrical shape or a rectangular parallelepiped shape, or the like. When the shell body 1 is the cylindrical shape, the shell body 1 includes end plates provided at two opposite ends, and a cylindrical side wall connected between the end plates. The cylindrical battery is relatively simple in manufacturing process, compact in structure, and easy to realize large-scale production. When the shell body 1 is the rectangular parallelepiped shape, the shell body 1 includes end plates provided at two opposite ends, and four side plates provided between the two end plates. The rectangular parallelepiped shape battery has high stability, can be operated in different environments, has a wide range of use scenarios, and is safe and reliable.

### First embodiment

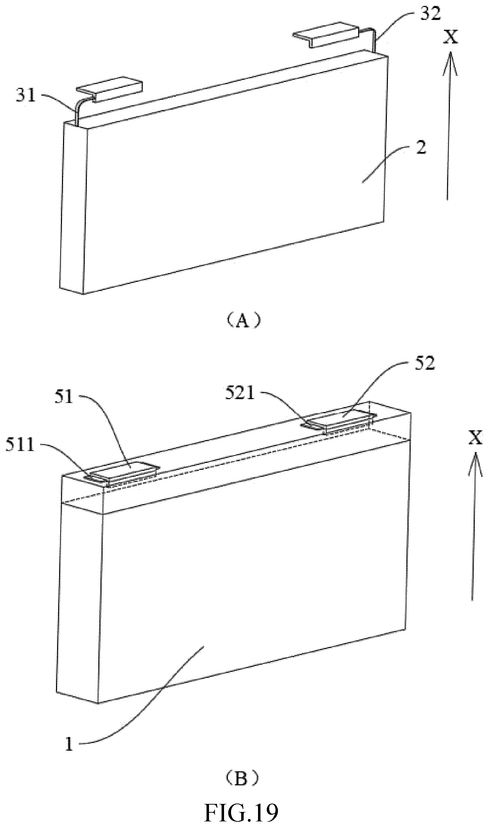

As shown in FIGS. 19-21, in the present embodiment, the tab includes a positive tab 221 and a negative tab 222, the positive tab 221 and the negative tab 222 both are disposed at the same end of the core 220 in the first direction X, a second insulating coating layer 7 is provided on an inner side wall of an end plate of the shell body 1 disposed opposite to the positive tab 221 and the negative tab 222, and a second insulating coating 7 is provided circumferentially on an inner side wall of the side plate of the shell body 1 disposed opposite to the positive tab 221 and the negative tab 222.

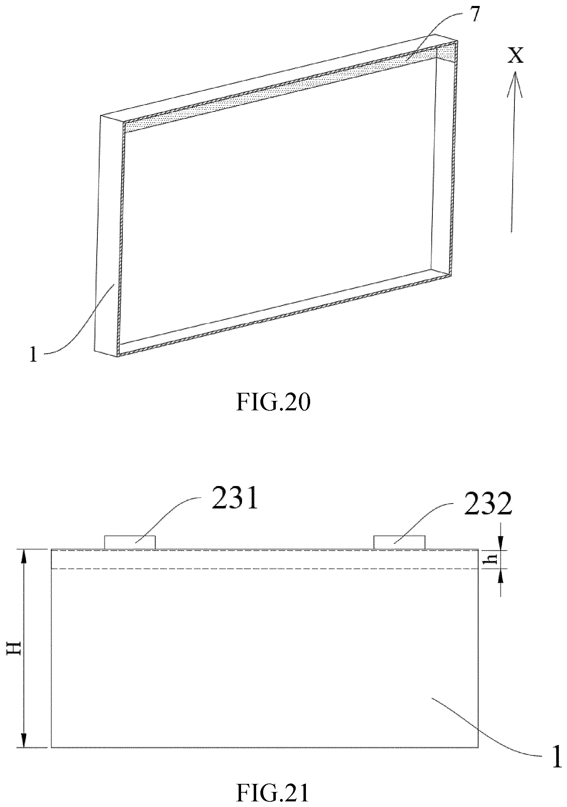

In the present embodiment, an ejection tab structure is used for the core, where a positive direction of the first direction X is upward and a negative direction of the first direction X is downward. As shown in FIG. 19, the positive tab 221 and the negative tab 222 both are provided at an upper end of the shell body 1. Correspondingly, as shown in FIG. 20, a second insulating coating 7 is provided on the inner side wall of the end plate of the upper end of the shell body 1, and a second insulating coating 7 is provided circumferentially on the inner side wall of the upper end of the side plate.

By adopting a design method of ejecting the tab, connection between the tab and an external device or a circuit can be more easily realized in a process of assembling a battery, and shape and size requirements of different batteries can be flexibly accommodated, so that the internal space layout of the battery is more reasonable, the energy density of the battery can be improved, and the overall volume and weight of the battery can be reduced, thereby realizing the requirements of light, thin and compact. In addition, in a manner of ejecting the tab, some process steps in the process of manufacturing the battery can be simplified, the input of materials is reduced, and the production cost of the battery can be reduced.

When the core 220 is mounted into the shell body 1, positions where the positive tab 221 and the negative tab 222 are in contact with the shell body 1 both are provided with the second insulating coating 7, thereby ensuring an insulating effect between the positive tab 221 and the shell body 1 and an insulating effect between the negative tab 222 and the shell body 1.

**Further,** as shown in FIG. 21, a width of a distribution region of the second insulating coating 7 in the first direction X is h, and an overall width of the shell body 1 in the first direction X is H, where 0.05H≤h≤0.2H, so that the insulating effect between the tab and the shell body 1 can be ensured, and an excessive distribution region of the second insulating coating 7 can be prevented from affecting the space of the core 220, thereby improving the space utilization rate in the battery and improving the design energy of the battery.

### Second embodiment

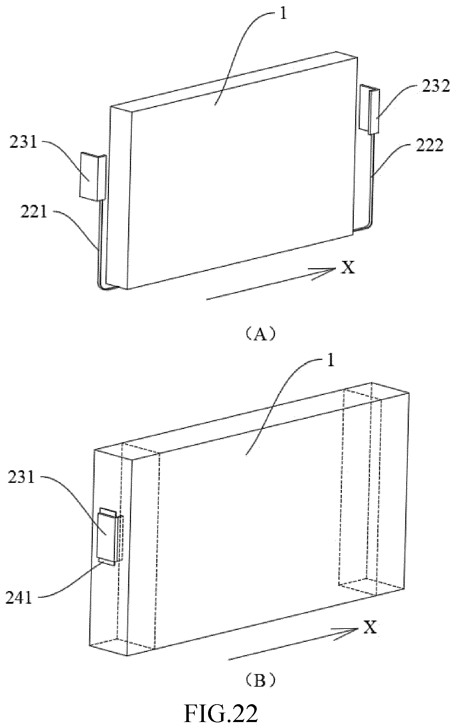

As shown in FIGS. 22-24, in the present embodiment, the tab includes a positive tab 221 and a negative tab 222, the positive tab 221 and the negative tab 222 are disposed at two opposite ends of the core 220 in the first direction X, respectively, a second insulating coating 7 is provided on inner side walls of two end plates of the shell body 1, and a second insulating coating 7 is provided circumferentially on an inner side wall of two ends of the side plate of the shell body 1 in the first direction X.

That is, the second insulating coating 7 is provided on the inner side walls of the end plates of the ends disposed opposite to the positive tab 221 and the negative tab 222, and further provided circumferentially on the inner side wall of the side plate, and the shell body 1 is insulated from the positive tab 221 and the negative tab 222, thereby preventing the internal short circuit of the battery.

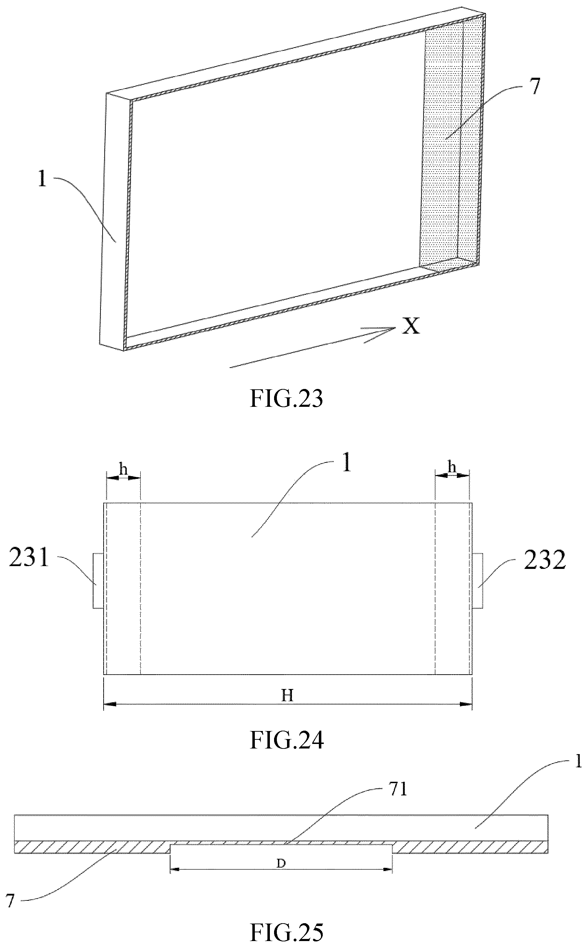

In the present embodiment, the battery cell adopts a side-out tab structure, where a positive direction of the first direction X is right, and a negative direction of the first direct X is left. As shown in FIG. 22, the positive tab 221 is located at the left end of the shell body 1, and the negative tab 222 is located at the right end of the shell body 1. As shown in FIG. 23, a second insulating coating 7 is provided on end plates at the left end and the right end of the shell body 1, and a second insulating coating 7 is provided circumferentially on the left end and the right end of the side plate of the shell body 1.

Since the tab is protruded from a side surface of the shell body 1, it is possible to more easily interface with an external connector or a circuit board, thereby reducing the assembly difficulty and improving the production efficiency. A side-out tab design helps to optimize a path of a current, and reduce a transmission distance of the current inside the battery, thereby reducing the internal resistance, and further improving the energy output of the battery during discharge. The side-out tab design makes the battery more compact in structure and improves space utilization.

When the core 220 is mounted into the shell body 1, positions where the positive tab 221 and the negative tab 222 are in contact with the shell body 1 both are provided with the second insulating coating 7, thereby ensuring an insulating effect between the positive tab 221 and the shell body 1 and an insulating effect between the negative tab 222 and the shell body 1.

Further, as shown in FIG. 24, a width of a distribution region of the second insulating coating 7 in the first direction X is h, and an overall width of the shell body 1 in the first direction X is H, where 0.05H≤h≤0.2H, so that the insulating effect between the tab and the shell body 1 can be ensured, and an excessive distribution region of the second insulating coating 7 can be prevented from affecting the space of the core 220, thereby improving the space utilization rate in the battery and improving the design energy of the battery.

In some embodiments, as shown in FIG. 25, the second insulating coating 7 is provided with a groove 71, where an extending direction of the groove 71 is the same as an extending direction of the tab, a width of the groove 71 is greater than or equal to a width of the tab, and the tab is provided within the groove 71.

The tab can be positioned by providing the tab within the groove 71 of the second insulating coating 7, so as to reduce friction and movement between the tab and the shell body 1 during use of the battery, thereby reducing the probability of wear of the tab and the shell body 1 and prolonging the life of the battery.

It should be understood that the extending direction of the groove 71 is a length direction of the groove 71. For example, in the configuration of the core in the first embodiment, the tab is protruded from the core 200, extend in the first direction, and continue to extend in the direction perpendicular to the first direction X after being bent close to the end plate of the shell body 1. Correspondingly, a groove 71 in the second insulating coating 7 provided on the inner side wall of the side plate of the shell body 1 also extends in the first direction X, and the groove 71 provided on the inner side wall of the end plate extends in the direction perpendicular to the first direction X. The tab can be inserted into the groove 71, which serve to limit the tab, thereby reducing the shaking and friction of the tab.

Further, a width of the groove 71 is D and a width of the tab is d, where 1.1d≤D≤1.3d.

That is, the width of the groove 71 is slightly greater than the width of the lug, so that the tab can be smoothly inserted into the groove 71 in the process of assembling the battery cell, and shaking of the tab in the width direction can be reduced in the process of using the battery cell, so as to ensure a positioning effect of the tab and further reduce the probability of wear of the tab.

Illustratively, the width D of the groove 71 and the width d of the tab may be set to D=1.1d, D=1.2d, or D=1.3d.

In some embodiments, the second insulating coating 7 has coating stripes, where an extending direction of the coating stripes is the same as the extending direction of the tab.

The coating stripes in the second insulating coating 7 can effectively block conduction of the current, thereby improving the insulating effect of the second insulating coating 7, and the design of the coating stripes can ensure the stability of the second insulating coating 7 by combining the scientific and engineering principles of materials.

By arranging the extending direction of the coating stripes to be the same as the extending direction of the tab, it is possible to reduce the frictional action between the tab and the coating stripes, thereby reducing the friction damage between the tab and the second insulating coating 7.

In some embodiments, the thickness of the second insulating coating 7 is in a range of 1-2mm.

The thickness of the insulating coating is an important parameter that affects an insulating property, a mechanical property and service life of the coating. In a certain application, the thickness of the insulating coating is required to be 1-2mm, which is determined based on the required electrical insulation strength, wear resistance, corrosion resistance, and expected service life of the coating.

It should be noted that the choice of the thickness of the second insulating coating 7 is not random, but needs to be determined according to specific industry standards, national standards or International Electrotechnical Commission standards (IEC standards).

At the same time, materials of different types of second insulating coating 7 may have different thickness requirements. In addition, the construction method and process of the insulating coating may also affect the final coating thickness.

Thus, when selecting and applying an insulating coating, it is desirable to take into account a variety of factors, including the material of the coating, performance requirements, construction conditions, and associated standards and specifications. This ensures that the second insulating coating 7 has good insulating property, mechanical property and service life, thereby meeting the needs of a practical application.

Illustratively, the thickness of the second insulating coating 7 may be 1 mm, 1.2 mm, 1.4 mm, 1.6 mm, 1.8 mm or 2 mm.

In a second aspect, embodiments of the present disclosure further provide a battery cell 200, including the battery cell shell 100 as described above.

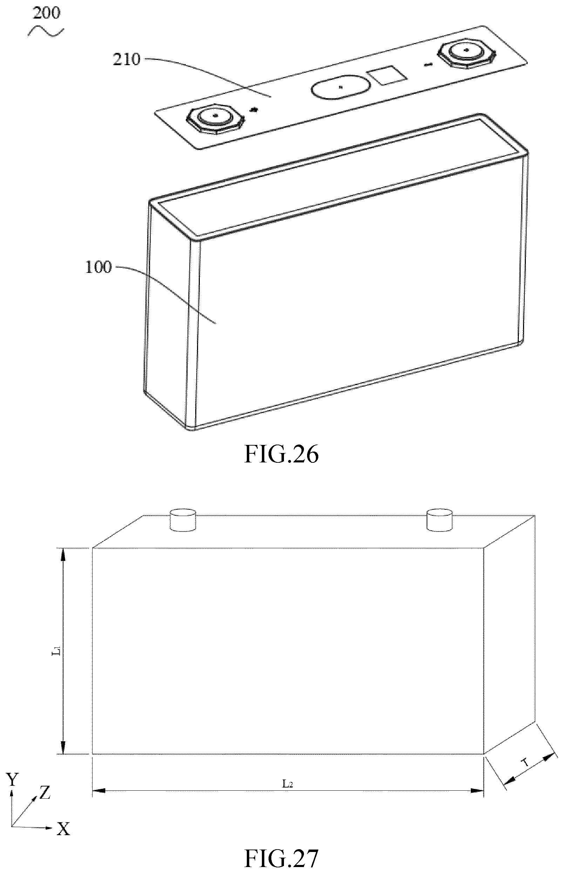

In some embodiments, as shown in FIG. 26, the battery cell 200 includes a battery cell shell 100, a cover plate 210, and a battery cell (not shown), where the cover plate 210 may be provided at an opening of the battery cell shell 100 for covering the opening to form an accommodating chamber for accommodating the battery cell.

In other embodiments, as shown in FIGS. 12 and 27, the battery cell 200 includes a core 220, a cover plate 210, and a battery cell shell 100. The core 220 is formed by winding or stacking pole pieces and a separator in a predetermined sequence, so that electric energy is stored by an electrochemical reaction. The core 220 has positive and negative tabs. The cover plate 210 is provided at the opening end of the shell body 1 for covering the opening end, is located at the end of the barrel 110 away from the bottom plate 120, and is welded to the barrel 110, so that the accommodating chamber 10 of the shell body 1 is in a sealed state. The core 220 is installed into the accommodating chamber 10, and the positive and negative tabs of the core 220 are electrically connected to the positive and negative poles in the cover plate 210, respectively, so that the current is externally conducted through the positive and negative poles. The cover plate 210 is further provided with a liquid injection hole through which an electrolyte is injected into the accommodating chamber 10, so that the electrolyte infiltrates the core 220 and electrochemically reacts with the core 220. Insulation isolation between the core 220 and the shell body 1 is achieved by providing the first protection layer 4 and the second protection layer 5 on the inner side surface of the shell body 1. It is avoided in the production process that the protection film is wrapped outside the core 220, thereby effectively avoiding quality problems such as air bubbles, glue shortage, glue extrusion, and wear caused by the protection film. The core 220 can be directly loaded into the accommodating chamber 10, thereby simplifying the assembly process of the unit battery and facilitating quality control. At the same time, a corrosion effect of the electrolyte on the protection layers is delayed under the anti-corrosion effect of the first protection layer 4 and the second protection layer 5, thereby facilitating prolonging the service life of the unit battery.

In some embodiments, as shown in FIG. 27, the shell body 1 is a rectangular parallelepiped shape, and a length, a thickness, and a height of the shell body 1 correspond to those of the battery cell, respectively. A ratio of a length dimension L1 to a height dimension L2 of the shell body 1 is in a range of 6:5 to 2:1, and a ratio of the height dimension L2 to a thickness dimension T of the shell body 1 is in a range of 2:1 to 25:7. The length dimension L of the shell body 1 is in a range of 300 mm to 400 mm, and the length dimension L1 of the shell body 1 includes, but is not limited to, 300 mm, 310 mm, 320 mm, 330 mm, 340 mm, 350 mm, 360 mm, 370 mm, 380 mm, 390 mm, or 400 mm. The thickness dimension T of the shell body 1 is in a range of 70 mm to 100 mm, and the thickness dimension T of the shell body 1 includes, but is not limited to, 70 mm, 75 mm, 80 mm, 85 mm, 90 mm, 95 mm, or 100 mm. The height dimension H of the shell body 1 is in a range of 200 mm to 250 mm, and the height dimension L2 of the shell body 1 includes, but is not limited to, 200 mm, 215 mm, 220 mm, 225 mm, 230 mm, 235 mm, 240 mm, 245 mm, or 250 mm. It should be understood that a ratio of the length to the height of the shell body 1 is in a range of 6:5 to 2:1, so that the unit battery has a larger surface (the larger surface being two opposite side surfaces of the shell body 1 in its thickness direction), which facilitates heat dissipation of the battery cell. The shell body 1 is in the ratio of the length to the width to the height to make the internal space of the accommodating chamber 10 more reasonable, thereby improving the utilization rate of the active substance inside the shell body 10, achieving the purpose of prolonging the service life of the unit battery, and meeting the requirements of overrunning and overcapacity of the user.

In other embodiments, the battery cell 200 further includes a pole having one end disposed on the exterior of the shell body 1 and another end penetrating through the shell body 1 and connected to the tab.

The pole is used to establish connection between the interior of the battery cell and an external circuit, so that electrical energy can be transferred between the battery cell and the external circuit, the pole is responsible for outputting electrical energy stored in the battery to the external circuit or for inputting electrical energy of the external circuit into the battery for storage.

In the connection process of the pole and the tab, a technology such as laser welding can be used to ensure a firm connection between the pole and the tab, while meeting the safety and performance requirements of the battery.

As shown in FIGS. 19 and 22, the pole includes a positive pole 231 and a negative pole 232, a resistance sheet 241 is provided between the positive pole 231 and an outer side wall of the shell body 1; and an insulating member 242 is provided between the negative pole 232 and the outer side wall of the shell body 1.

The positive pole 231 is connected to the positive tab 221, and the negative pole 232 is connected to the negative tab 222.

That is, the core adopts a positive electrode weak conduction structure, the resistance sheet 241 is provided between the positive pole 231 and the shell body 1, and the negative pole 232 is insulated from the shell body 1. A voltage between the shell body 1 and the positive pole 231 is approximately equal to an open circuit voltage of the battery according to Ohm's law of division pressure principle, and the shell body 1 is positively charged, thereby damaging the corrosion condition of the shell body 1 and delaying the corrosion of the shell body 1. The negative pole 232 is insulated from the outer side wall of the shell body 1 by the insulating member 242 to prevent short circuit. In the interior of the shell body 1, the insulation effect is ensured by the second insulating coating layer 7 provided in the corresponding region of the positive tab 221 and the negative tab 222, thereby reducing or avoiding the short circuit in the battery.

## Claims

1. A battery cell shell, comprising: a shell body; and a first insulating coating disposed on an outer surface of the shell body.

2. The battery cell shell of claim 1, wherein the shell body comprises at least two shell surfaces, and a connection surface disposed between adjacent ones of the shell surfaces, and an included angle is provided between the adjacent shell surface; and
an outer surface of each of the shell surfaces is provided with a first rough layer, and an outer surface of the connection surface is provided with a second rough layer; the first rough layer and the second rough layer are disposed between the shell body and the first insulating coating;
wherein a roughness R₁ of the first rough layer and a roughness R₂ of the second rough layer satisfy R₁<R₂.

3. The battery cell shell of claim 2, wherein the roughness R₁ of the first rough layer satisfies: 3.2≤Ra≤12.5, and 6.3≤Rz≤50; and/or
the roughness R₂ of the second rough layer satisfies: 6.3≤Ra≤50, and 25≤Rz≤100.

4. The battery cell shell of claim 3, wherein the first rough layer has a thickness of 50 µm-120 µm; and/or
the second rough layer has a thickness of 100 µm-200 µm.

5. The battery cell shell of any one of claims 2-4, wherein the connection surface is a rounded portion or a chamfered portion.

6. The battery cell shell of claim 5, wherein the connection surface is the rounded portion, and the rounded portion has a rounded radius of 2 mm-4 mm.

7. The battery cell shell of any one of claims 2-6, wherein a transition surface is provided on a side of the shell surface close to the connection surface; and
an outer surface of the transition surface is provided with a third rough layer, and the roughness R₃ of the third rough layer satisfies R₁<R₃<R₂.

8. The battery cell shell of claim 7, wherein the roughness R₃ of the third rough layer satisfies: 6.3≤Ra≤12.5, and 12.5≤Rz≤50.

9. The battery cell shell of claim 7, wherein the transition surface is provided on at least one side of the shell surface in a first direction; and
a width of the transition surface in the first direction is W₁, and a width of the shell surface in the first direction is W₂; wherein 0.5%≤W₁/W₂≤1%.

10. The battery cell shell of any one of claims 1-9, wherein the shell body has an accommodating chamber for accommodating a core, and a first protection layer is provided on a side surface of the shell body toward the accommodating chamber.

11. The battery cell shell of claim 10, wherein a second protection layer is provided on a side surface of the first protection layer away from the shell body, the first protection layer and the second protection layer each include a plurality of anti-corrosion layers and a plurality of insulating layers, and the plurality of anti-corrosion layers are interleaved with the plurality of insulating layers; and
the anti-corrosion layers in the first protection layer are misaligned with the anti-corrosion layers in the second protection layer, and the insulating layers in the first protection layer are misaligned with the insulating layers in the second protection layer.

12. The battery cell shell of claim 11, wherein a sum of a thickness of the first protection layer and a thickness of the second protection layer is 150 µm-200 µm.

13. The battery cell shell of claim 11, wherein a proportion of the insulating layers in the first protection layer is greater than or equal to 50%, and a proportion of the anti-corrosion layers in the second protection layer is greater than or equal to 50%.

14. The battery cell shell of claim 10, wherein the shell body comprises a barrel and a bottom plate, the barrel is a cavity structure with two opposite ends being opened, the bottom plate is provided at one of the opening ends of the barrel, and the accommodating chamber is enclosed by the barrel and the bottom plate.

15. The battery cell shell of claim 11, wherein, in the first protection layer and the second protection layer, the plurality of anti-corrosion layers are spaced apart in a first direction, and each of the insulating layers is provided between two adjacent ones of the anti-corrosion layers.

16. The battery cell shell of claim 11, wherein the first protection layer and the second protection layer each comprise a plurality of protection regions sequentially arranged in a first direction, a plurality of anti-corrosion layers and a plurality of insulating layers are provided in each of the protection regions, the plurality of anti-corrosion layers in the each of the protection regions are spaced apart in a second direction, each of the insulating layers is provided between two adjacent ones of the anti-corrosion layers, the anti-corrosion layers in two adjacent ones of the protection regions are misaligned with each other, and the insulating layers in two adjacent ones of the protection regions are misaligned with each other.

17. The battery cell shell of claim 16, wherein the first protection layer and the second protection layer each comprise a plurality of protection regions distributed in " 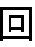 " shape, and in two adjacent ones of the protection regions, one protection region is provided with the anti-corrosion layers, and another protection region is provided with the insulating layers.

18. The battery cell shell of any one of claims 10-17, further comprising a base layer formed on a side surface of the shell body toward the accommodating chamber by spraying, wherein the first protection layer is disposed on the base layer.

19. The battery cell shell of any one of claims 1-9, wherein a second insulating coating is provided circumferentially on an inner side wall of an end of the shell body disposed opposite to a tab of a core.

20. The battery cell shell of claim 19, wherein a width of the shell body in a first direction is H, and a width of the second insulating coating in the first direction is h, and wherein 0.05H≤h≤0.2H.

21. The battery cell shell of claim 20, wherein the battery cell body comprises: two end plates disposed at two opposite ends in the first direction; and side plates disposed between the two end plates;
the second insulating coating is provided on an inner side wall of an end plate of an end of the battery cell shell disposed opposite to the tab; and
the second insulating coating is provided circumferentially on an inner side wall of an end of the side plate disposed opposite to the tab.

22. The battery cell shell of claim 21, wherein the tab comprises a positive tab and a negative tab;
the positive tab and the negative tab both are disposed at a same end of the core in the first direction;
the second insulating coating layer is provided on an inner side wall of an end plate of an end of the shell body disposed opposite to the positive tab and the negative tab; and
the second insulating coating is provided circumferentially on an inner side wall of an end of the side plate disposed opposite to the positive tab and the negative tab.

23. The battery cell shell of claim 21, wherein the tab comprises a positive tab and a negative tab;
the positive tab and the negative tab are disposed at two opposite ends of the core in the first direction, respectively; and
the second insulating coating is provided on inner side walls of the two end plates in the battery cell shell, and provided circumferentially on inner side walls of two ends of the side plate in the first direction.

24. The battery cell shell of any one of claims 19-23, wherein the second insulating coating is provided with a groove;
an extending direction of the groove is the same as an extending direction of the tab, and a width of the groove is greater than or equal to a width of the tab; and
the tab is provided within the groove.

25. The battery cell shell of claim 24, wherein a width of the groove is D and a width of the tab is d, and wherein 1.1d<D<1.3d.

26. The battery cell shell of any of claims 19-25, wherein the second insulating coating has coating stripes, and an extending direction of the coating stripes is the same as an extending direction of the tab.

27. The battery cell shell of any one of claims 19-25, wherein the second insulating coating has a thickness of 1 mm-2 mm.

28. A battery cell, comprising the battery cell shell of any one of claims 1-27.

29. The battery cell of claim 28, further comprising a core and a top cover assembly, wherein the core is mounted within an accommodating chamber, the top cover assembly is configured to cover an opening end of the shell body, and the top cover assembly is electrically connected to the core.

30. The battery cell of claim 29, wherein the shell body has a rectangular parallelepiped shape structure, a ratio of a length dimension to a height dimension of the shell body is 6:5-2: 1, and a ratio of the height dimension to a thickness dimension of the shell body is 2:1-25:7.

31. The battery cell of claim 28, further comprising a pole and a core, wherein the core is mounted within an accommodating chamber of the battery cell shell, one end of the pole is disposed outside the shell body, and another end of the pole penetrates through the shell body and is connected to a tab of the core.

32. The battery of claim 31, wherein the pole comprises a positive pole and a negative pole;
a resistance sheet is provided between the positive pole and an outer side wall of the shell body; and
an insulating member is provided between the negative pole and the outer side wall of the shell body.
